(19)

Europäisches
Patentamt
European
Patent Office
Office européen
des brevets

(11) **EP 2 306 020 B1**

(12) **EUROPEAN PATENT SPECIFICATION**

(45) Date of publication and mention
of the grant of the patent:
**23.05.2012 Bulletin 2012/21**

(51) Int Cl.:
*F04B 49/06* (2006.01)     *F04B 49/10* (2006.01)
*F04D 15/00* (2006.01)

(21) Application number: **10172284.1**

(22) Date of filing: **09.08.2010**

(54) **Method and apparatus in connection with pump drive**

Verfahren und Vorrichtung im Zusammenhang mit einem Pumpenantrieb

Procédé et dispositif en relation avec un entraînement de pompe

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **30.09.2009 FI 20095999**

(43) Date of publication of application:
**06.04.2011 Bulletin 2011/14**

(73) Proprietor: **ABB Oy
00380 Helsinki (FI)**

(72) Inventor: **Saukko, Juha
00750 Helsinki (FI)**

(74) Representative: **Valkeiskangas, Tapio Lassi
Paavali
Kolster Oy Ab
Iso Roobertinkatu 23
P.O. Box 148
00121 Helsinki (FI)**

(56) References cited:
**JP-A- 58 113 596      JP-A- 2001 073 957
JP-A- 2004 306 230    JP-A- 2008 014 230
US-A- 4 544 275**

## Description

## Background of the invention

The present invention relates to a method and arrangement in connection with a pump drive connected to a container or the like in accordance with the preambles of the independent claims.

Pump drives connected to a container or the like are used for many purposes, such as pumping groundwater or service water from a well or pumping other liquid from a container. When the material being pumped is limited, it is possible that the pump cannot be used at constant power all the time. A lengthy use of a pump without a flow through the pump may cause overheating in the pump and the material being pumped and consequently also damage to the pump drive.

In prior art, pumps are controlled utilising surface measuring techniques, such as measuring sensors based on ultra-sound or pressure. Measuring sensors of this type provide accurate surface data. The flow of the pump is adjusted to provide the required surface level. Pump control may also be done by using a cable float level switch or mounted float level switch. With these, pumping between the top and bottom limits of the surface is often implemented with on/off control without adjustment.

There is always a risk that measuring sensors break, so they reduce the reliability of the operation of the apparatus. For instance, a float level switch may in time break due to humidity or contact terminal connection problems may occur in it. In addition, measuring sensors, their cabling, and the extra work needed to install and service them cause additional costs. Japanese patent publication JP58113596A discloses an arrangement where a flow through two pumps and a valve is controlled by controlling a pressure at a valve and rotational speeds of two motors. In other words, rotational speed of a pump is controlled. Further, JP58113596A discloses that the rotational speed of the pump is controlled responsive to a flow and a pressure. Japanese patent publication JP2001073957A discloses a method where a water level of a tank is kept within a maximum limit by using a pump. The pump is switched on and off in respect to time limits calculated on the basis of the incoming flow and a known volume representing the maximum limit.

## Brief description of the invention

It is thus an object of the invention to develop a method and an apparatus implementing the method in such a manner that the above-mentioned problems are solved. The object of the invention is achieved by a method and an apparatus, which are characterized by what is disclosed in the independent claims. Preferred embodiments of the invention are disclosed in the dependent claims.

The invention is based on the idea that the size of the mean flow into the container of the like is estimated by utilising the known flow of a pump controlled by a frequency converter. On the basis of this estimated size, the pump is set to a required operating point for pumping, that is, a suitable flow is set for the pump. Information on the size of the estimated mean incoming flow is updated by repeating the measuring cycle at regular intervals or as necessary.

According to a preferred embodiment of the invention, the emptying of the container or the like is detected from the decrease in the torque of the pump measured by the frequency converter as the flow of the pump decreases.

The method and system of the invention provide the advantage that the inventive arrangement does not need information on the surface level in the container and, therefore, no sensors for determining the level. As no separate devices are required for measuring the surface, the installation of the arrangement of the invention is faster and cheaper than before. The arrangement of the invention is also more reliable in operation, since it only contains parts that are needed for pumping. In addition, the arrangement of the invention is less expensive than arrangements implemented in the previously known ways.

According to a preferred embodiment, a float level switch is used to generate a top level alarm in the container but not to control the actual pumping process.

## Brief description of figures

The invention will now be explained in greater detail in connection with preferred embodiments and with reference to the attached drawings, in which:

Figure 1 shows a diagram of an arrangement to which the method of the invention may be applied.
Figure 2 shows the effect of the incoming flow $Q$ and the flow $Q_p$ exiting through the pump on the quantity $v$ of material in the container.
Figure 3 shows an embodiment of the invention in which the surface level $h$ may be kept at a required level in the container or the like.

## Detailed description of the invention

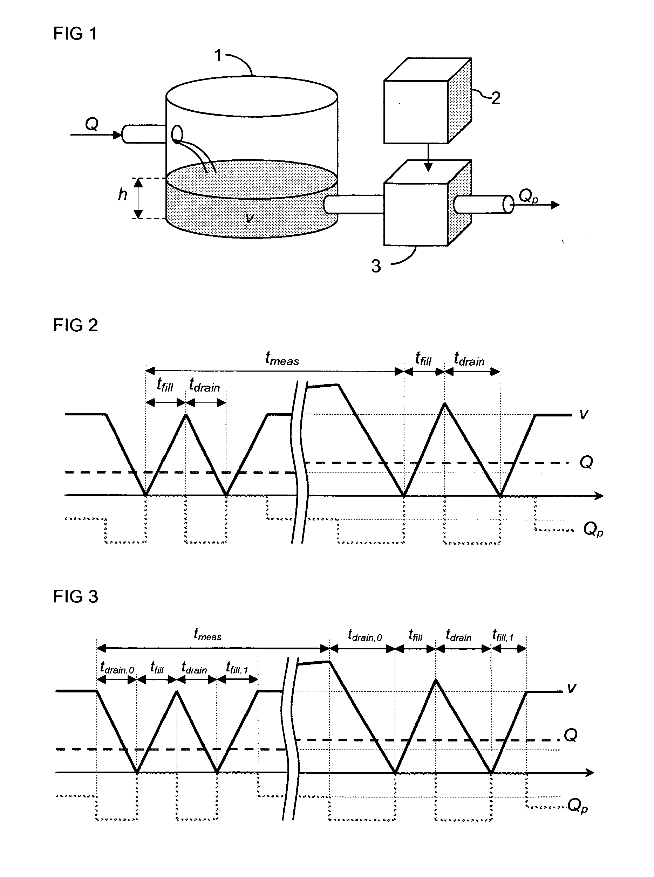

Figure 1 shows a diagram of an arrangement to which the method of the invention may be applied. Material flows into the container 1 at flow $Q$ and exits from the container 1 through the pump 3 at flow $Q_p$. The surface level $h$ of the material in the container is maintained in response to the difference between the incoming and exiting flow of the container. A frequency converter 2 is connected to control an electric motor coupled mechanically to the pump 3 by providing it with power.

Figure 2 shows the effect of the incoming flow $Q$ and the flow $Q_p$ exiting through the pump on the quantity v of material in the container. Prior to using the method of the invention, the container 1 or the like is drained, if it has not been found empty. When the container 1 or the like is drained, the flow $Q_p$ of the pump 3 decreases. In general, the flow of the pump is responsive to the torque of the pump motor. As a result of the decrease in the pump 3 flow $Q_p$, the torque of the pump 3 motor also decreases. The frequency converter 2 comprises means for measuring the torque and detects the decrease in the torque of the pump 3 motor. According to a preferred embodiment of the invention, the container 1 or the like is judged to be empty, if the torque is smaller than a predefined percentage of an assumed torque defined for the set flow $Q_p$ of the pump 3. Said predefined percentage may be 20% to 50%, for instance.

After detecting that the container 1 is empty, it is allowed to fill up during a predefined filling time $t_{fill}$ while the pump 3 is inactive. After this, the container 1 is drained again at a known pump 3 flow $Q_{p,nom}$, and the time $t_{drain}$ needed for draining is determined. As above, the draining is now also preferably detected on the basis of the change in the torque used in pumping.

The container 1 is again empty, like at the start of the measuring cycle, so the same quantity of material has flown through the pump 3 during the measuring cycle as has entered the container 1. Thus, the absolute value of the time integral of the incoming flow Q during the measuring cycle equals the time integral of the nominal flow $Q_{p,nom}$ passing through the pump 3 during the measuring cycle. The values of the incoming flow Q and the nominal pump flow $Q_{p,nom}$ have opposite signs, because their flow directions are opposite to each other in relation to the container 1. Therefore, it is possible to calculate an estimate for the incoming flow Q on the basis of the nominal pump 3 flow $Q_{p,nom}$. The nominal pump 3 flow $Q_{p,nom}$ may be calculated by using the specific performance curves of the pump 3. The incoming flow Q may be assumed to be of a constant size during the measuring cycle. Thus, the estimated mean incoming flow $Q_{est}$ corresponding to the incoming flow Q is

$$Q_{est} = -\frac{Q_{p,nom} \cdot t_{drain}}{t_{fill} + t_{drain}}$$

At the end of the measuring cycle, the container 1 is allowed to fill to a predefined extent so as to have a flow through the pump 3 after the measuring cycle. After the measuring cycle, the power supplied by the frequency converter 2 to the pump 3 is set to be such that the pump 3 flow $Q_p$ corresponds to the produced estimated mean incoming flow $Q_{est}$. Information on the size of the estimated mean incoming flow $Q_{est}$ is constantly updated by repeating the measuring cycle at predefined measuring intervals $t_{meas}$ or as necessary when drainage of the container is detected.

If the drainage time $t_{drain}$ during the measuring cycle is too short, that is, the estimated mean incoming flow $Q_{est}$ is lower than the predefined minimum limit value $Q_{p,min}$, the frequency converter 2 goes into sleep mode in accordance with the preferred embodiment of the invention. The pump 3 is then not in use. The system may return from sleep mode to normal mode due to top limit detection from a measuring sensor, such as float level switch, or a new measuring cycle. An example of the embodiment of the invention is a rain water pump station. When it does not rain, the well is empty and the frequency converter is in sleep mode. When rain begins, water level rises and top limit detection from the measuring sensor returns the frequency converter to normal mode.

According to an embodiment of the invention, the surface level h may be kept at a required level in the container or the like. The container 1 is then drained for the first time during the measuring cycle by using the nominal flow of the pump 3. In the manner shown in Figure 3, the drainage time $t_{drain,0}$ is measured and the obtained time is used together with the nominal flow $Q_{p,nom}$ of the pump 3 and the estimated mean incoming flow $Q_{est}$ to estimate the material volume $v_{est}$ in the container 1 or the like as follows:

$$v_{est} = -(Q_{est} + Q_{p,nom}) \cdot t_{drain,0}$$

The above equation produces the volume of material in the container 1 before the measuring cycle. The estimated mean incoming flow $Q_{est}$ is calculated earlier with said equation by using the measuring results of the present measuring cycle.

At the end of the measuring cycle, the material volume v in the container 1 is returned to the desired level by allowing the container to fill while the pump is inactive for the time of a second filling time $t_{fill,1}$. The second filling time is obtained from equation

$$t_{fill,1} = \frac{v}{Q_{est}}$$

If the volume of the container 1 is known, its filling factor may be calculated by dividing the produced estimated material volume $v_{est}$ by the nominal material volume of the container 1. The filling factor data may be utilised in an adjustment where the surface level h is kept at a desired level.

It is obvious to a person skilled in the art that, as technology advances, the basic idea of the invention may be implemented in various ways. The invention and its embodiments are thus not restricted to the above examples but may vary within the scope of the claims.

## Claims

1. A method in connection with a pump drive connected to a container (1) or the like, wherein a frequency converter (2) is arranged to supply power to a pump (3) in such a manner that the pump flow ($Q_p$) is responsive to an estimated incoming flow ($Q_{est}$) to the container (1), **characterised in that** the method comprises the steps of
draining the container (1),
allowing the container (1) to fill during a predefined filling time ($f_{fill}$) while the pump (3) is inactive,
draining the container (1) again at a known pump 3 flow ($Q_{p,nom}$), defining a drainage time ($t_{drain}$),
defining an estimated mean incoming flow ($Q_{est}$) on the basis of the drainage time ($t_{drain}$), the filling time ($t_{fill}$), and known flow ($Q_{p,onom}$) of the pump,
setting the power supplied by the frequency converter (2) to the pump (3) to be such that the pump (3) flow ($Q_p$) corresponds to the produced estimated mean incoming flow ($Q_{est}$).

2. A method as claimed in claim 1, **characterised in that** the estimation of the emptiness of the container (1) or the like comprises the steps of
defining a motor torque from the power supplied by the frequency converter (2) to the pump (3) motor,
judging that the container (1) or the like is empty, if the torque is smaller than a predefined percentage of an assumed torque defined for the set flow ($Q_p$) of the pump (3).

3. A method as claimed in claim 1 or 2, **characterised by** determining the estimated mean incoming flow ($Q_{est}$) on the basis of the filling time ($t_{fill}$) and drainage time ($t_{drain}$) and known flow ($Q_{p,nom}$) of the pump (3) as follows:

$$Q_{est} = -\frac{Q_{p,nom} \cdot t_{drain}}{t_{fill} + t_{drain}} \,.$$

4. A method as claimed in any one of claims 1 to 3, **characterised by** constantly updating the information on the size of the estimated mean incoming flow ($Q_{est}$) by repeating the measuring cycle of the method at predefined measuring intervals ($t_{meas}$) or as necessary when drainage of the container is detected.

5. A method as claimed in any one of claims 1 to 4, **characterised by** activating the sleep mode of the frequency converter (2), during which the pump (3) is not in use, if the estimated mean incoming flow ($Q_{est}$) is lower than a predefined minimum limit value ($Q_{p,min}$).

6. A method as claimed in claim 5, **characterised by** returning from the sleep mode due to a new measuring cycle.

7. A method as claimed in claim 5 or 6, wherein the container (1) or the like comprises a measuring sensor indicating top limit data of material level, **characterised by** returning from the sleep mode to normal operation due to a top limit indication from the measuring sensor.

8. A method as claimed in any one of claims 1 to 7, **characterised by**
draining the container (1) for the first time during the measuring cycle of the method by using a nominal flow of the pump (3),
measuring the drainage time ($t_{drain,O}$), and
using the obtained time together with the nominal flow ($Q_{p,nom}$) of the pump (3) and the estimated mean incoming flow ($Q_{est}$) to estimate the material volume ($v_{est}$) in the container (1) or the like before the measuring cycle of the method as follows:

$$v_{est} = -(Q_{est} + Q_{p,nom}) \cdot t_{drain,0}$$

wherein the estimated mean incoming flow $Q_{est}$ is defined in accordance with the method by using the measuring results according to the present measuring cycle of the method.

9. A method as claimed in claim 8, **characterised by** returning, at the end of the measuring cycle according to the method, the material volume ($v$) in the container (1) to a desired level by allowing the container to fill while the pump is inactive for the time of a second filling time ($t_{fill,1}$), wherein the second filling time ($t_{fill,1}$) is obtained using the equation

$$t_{fill,1} = \frac{v}{Q_{est}}$$

10. A method as claimed in claim 8 or 9, **characterised by** calculating the filling factor of the container (1) by dividing the estimated material volume ($v_{est}$) by the known nominal material volume of the container (1).

11. An apparatus arranged to operate a pump drive connected to a container (1) or the like, wherein a frequency converter (2) is arranged to supply power to a pump (3) in such a manner that the pump flow ($Q_p$) is responsive to an estimated incoming flow ($Q_{est}$) to the container (1), **characterised in that** the apparatus comprises means configured to

configured to drain the container (1),
allow the container (1) to fill during a predefined filling time ($t_{fill}$) while the pump (3) is inactive,
drain the container (1) again at a known pump 3 flow ($Q_{p,nom}$), define a drainage time ($t_{drain}$), define an estimated mean incoming flow ($Q_{est}$) on the basis of the drainage time ($t_{drain}$), the filling time ($t_{fill}$), and known flow ($Q_{p,nom}$) of the pump,
set the power supplied by the frequency converter (2) to the pump (3) to be such that the pump (3) flow ($Q_p$) corresponds to the produced estimated mean incoming flow *($Q_{est}$)*.

## Patentansprüche

1. Ein Verfahren im Zusammenhang mit einem Pumpenantrieb, der an einen Behälter (1) oder an etwas Ähnliches angeschlossen ist, wobei ein Frequenzkonverter (2) angeordnet ist, eine Pumpe (3) derart mit Kraft zu versorgen, dass der Pumpenfluss ($Q_p$) auf einen geschätzten eingehenden Fluss ($Q_{est}$) in den Behälter (1) reagiert, **dadurch gekennzeichnet, dass** das Verfahren folgende Schritte aufweist den Behälter (1) dränieren,
   den Behälter (1) sich in einer im Voraus bestimmten Füllzeit ($t_{fill}$) füllen zu lassen während die Pumpe (3) inaktiv ist,
   den Behälter (1) mit einem bekannten Fluss ($Q_{p,nom}$) der Pumpe (3) wieder dränieren,
   die Dränagezeit ($t_{drain}$) bestimmen,
   einen geschätzten, durchschnittlichen, eingehenden Fluss ($Q_{est}$) auf der Basis der Dränagezeit ($t_{drain}$), der Füllzeit ($t_{fill}$) und des bekannten Flusses ($Q_{p,nom}$) der Pumpe bestimmen,
   die von dem Frequenzkonverter (2) an die Pumpe (3) gelieferte Kraft derart einstellen, dass der Fluss ($Q_p$) der Pumpe (3) dem produzierten, geschätzten, durchschnittlichen, eingehenden Fluss ($Q_{est}$) entspricht.

2. Ein Verfahren gemäß dem Patentanspruch 1, **dadurch gekennzeichnet, dass** die Schätzung der Leerheit des Behälters (1) oder eines Ähnlichen die folgenden Schritte aufweist
   ein Drehmoment des Motors von der durch den Frequenzkonverter (2) an den Motor der Pumpe (3) gelieferten Kraft bestimmen,
   beurteilen, dass der Behälter (1) oder etwas Ähnliches leer ist, wenn das Drehmoment kleiner als ein im Voraus bestimmter Prozent eines angenommenen, für den gesetzten Fluss ($Q_p$) der Pumpe (3) bestimmtes Drehmoment ist.

3. Ein Verfahren gemäß dem Patentanspruch 1 oder 2, **dadurch gekennzeichnet, dass** der geschätzte, durchschnittliche, eingehende Fluss ($Q_{est}$) auf der Basis der Füllzeit ($t_{fill}$) und der Dränagezeit ($t_{drain}$)

und des bekannten Flusses ($Q_{p,nom}$) der Pumpe (3) wie folgt bestimmt wird:

$$Q_{est} = -\frac{Q_{p,nom} \cdot t_{drain}}{t_{fill} + t_{drain}} \, .$$

4. Ein Verfahren gemäß einem der Patentansprüche 1 bis 3, **dadurch gekennzeichnet, dass** die Information über den geschätzten, durchschnittlichen, eingehenden Fluss ($Q_{est}$) mittels Wiederholung des Messzyklus des Verfahrens mit im Voraus bestimmten Messintervallen ($t_{meas}$) oder bei Bedarf, wenn eine Dränage des Behälters entdeckt wird, dauernd aufdatiert wird.

5. Ein Verfahren gemäß einem der Patentansprüche 1 bis 4, **dadurch gekennzeichnet, dass** der Schlafmodus des Frequenzkonverters (2) aktiviert wird, während dessen die Pumpe (3) nicht in Betrieb ist, falls der geschätzte, durchschnittliche, eingehende Fluss ($Q_{est}$) niedriger als ein im Voraus bestimmter Minimumgrenzwert ($Q_{p,min}$) ist.

6. Ein Verfahren gemäß dem Patentanspruch 5, **dadurch gekennzeichnet, dass** wegen eines neuen Messzyklus von dem Schlafmodus zurückgekehrt wird.

7. Ein Verfahren gemäß dem Patentanspruch 5 oder 6, wobei der Behälter (1) oder etwas Ähnliches einen Messsensor aufweist, der obere Grenzdaten der Materialhöhe indiziert, **dadurch gekennzeichnet, dass** von dem Schlafmodus in einen normalen Betrieb zurückgekehrt wird, wenn der Messsensor eine obere Grenze indiziert.

8. Ein Verfahren gemäß einem der Patentansprüche 1 bis 7, **dadurch gekennzeichnet, dass**
   der Behälter (1) zum ersten Mal während des Messzyklus des Verfahrens dräniert wird, indem ein Nominalfluss der Pumpe (3) verwendet wird,
   die Dränagezeit ($t_{drain,O}$) gemessen wird, und
   die erhaltene Zeit zusammen mit dem Nominalfluss ($Q_{p,nom}$) der Pumpe (3) und dem geschätzten, durchschnittlichen, eingehenden Fluss ($Q_{est}$) zur Schätzung des Materialvolumens ($v_{est}$) in dem Behälter (1) oder etwas Ähnlichem vor dem Messzyklus des Verfahrens wie folgt verwendet wird:

$$v_{est} = -(Q_{est} + Q_{p,nom}) \cdot t_{drain,0}$$

wobei der geschätzte, durchschnittliche, eingehen-

de Fluss ($Q_{est}$) dem Verfahren entsprechend bestimmt wird, indem die Messresultate in Entsprechung mit dem gegenwärtigen Messzyklus des Verfahrens verwendet werden.

9. Ein Verfahren gemäß dem Patentanspruch 8, **dadurch gekennzeichnet, dass**, am Ende des Messzyklus gemäß dem Verfahren das Materialvolumen (v) in dem Behälter (1) zu einer gewünschten Höhe zurückgebracht wird, indem man den Behälter sich füllen lässt, während die Pumpe für die Zeit einer zweiten Füllzeit (t$_{fill}$) inaktiv ist, wobei man die zweite Füllzeit (t$_{fill}$) mit folgender Gleichung erhalten wird

$$ t_{fill,1} = \frac{v}{Q_{est}} $$

10. Ein Verfahren gemäß dem Patentanspruch 8 oder 9, **dadurch gekennzeichnet, dass** der Füllfaktor des Behälters (1) berechnet wird, indem das geschätzte Materialvolumen *($v_{est}$)* mit dem bekannten Nominalmaterialvolumen des Behälters (1) dividiert wird.

11. Eine Anordnung, die angeordnet ist, einen, an einen Behälter (1) oder etwas Ähnlichem angeschlossenen Pumpenantrieb zu betreiben, wobei ein Frequenzkonverter (2) angeordnet ist, die Pumpe (3) derart mit Kraft zu versorgen, dass der Pumpenfluss ($Q_p$) auf einen geschätzten, eingehenden Fluss ($Q_{est}$) zu dem Behälter (1) reagiert, **dadurch gekennzeichnet, dass** die Anordnung Mittel aufweist, die konfiguriert sind,
den Behälter (1) zu dränieren,
den Behälter (1) sich füllen zu lassen in einer im Voraus bestimmten Füllzeit ($t_{fill}$) während die Pumpe (3) inaktiv ist,
den Behälter (1) wieder zu dränieren bei einem bekannten Fluss ($Q_{p,nom}$) der Pumpe (3),
eine Dränagezeit ($t_{drain}$) zu bestimmen,
einen geschätzten, durchschnittlichen, eingehenden Fluss ($Q_{est}$) auf der Basis der Dränagezeit ($t_{drain}$), der Füllzeit ($t_{fill}$) und des bekannten Flusses ($Q_{p,nom}$) der Pumpe zu bestimmen,
die durch den Frequenzkonverter (2) der Pumpe (3) gelieferte Kraft derart einzustellen, dass der Fluss ($Q_p$) der Pumpe (3) dem produzierten, geschätzten, durchschnittlichen, eingehenden Fluss ($Q_{est}$) entspricht.

## Revendications

1. Procédé en relation avec un entraînement de pompe relié à un récipient (1) ou analogue, dans lequel un convertisseur de fréquence (2) est agencé pour fournir de la puissance à une pompe (3) de telle manière que le débit ($Q_p$) de la pompe soit sensible à un débit entrant estimé ($Q_{est}$) dans le récipient (1), **caractérisé en ce que** le procédé comprend les étapes suivantes :

vidange du récipient (1),
remplissage du récipient (1) pendant un temps de remplissage prédéfini ($t_{fill}$) tandis que la pompe (3) est inactive,
nouvelle vidange du récipient (1) à un débit connu ($Q_{p,nom}$) de la pompe (3),
définition d'un temps de vidange ($t_{drain}$),
définition du débit entrant moyen estimé ($Q_{est}$) sur la base du temps de vidange ($t_{drain}$), du temps de remplissage ($t_{fill}$) et du débit connu ($Q_{p,nom}$) de la pompe,
réglage de la puissance fournie par le convertisseur de fréquence (2) à la pompe (3) de façon que le débit ($Q_p$) de la pompe (3) corresponde au débit entrant moyen estimé ($Q_{est}$) produit.

2. Procédé selon la revendication 1, **caractérisé en ce que** l'estimation de l'état de vide du récipient (1) ou analogue comprend les étapes suivantes :

définition d'un couple moteur à partir de la puissance fournie par le convertisseur de fréquence (2) au moteur de la pompe (3),
jugement que le récipient (1) ou analogue est vide si le couple est plus petit qu'un pourcentage prédéfini d'un couple supposé défini pour le débit réglé ($Q_p$) de la pompe (3).

3. Procédé selon la revendication 1 ou 2, **caractérisé par** la détermination du débit entrant moyen estimé *($Q_{est}$)* sur la base du temps de remplissage ($t_{fill}$), du temps de vidange ($t_{drain}$) et du débit connu ($Q_{p,nom}$) de la pompe (3) comme suit :

$$ Q_{est} = -\frac{Q_{p,nom} \cdot t_{drain}}{t_{fill} + t_{drain}} $$

4. Procédé selon une quelconque des revendications 1 à 3, **caractérisé par** la mise à jour constante des informations sur la grandeur du débit entrant moyen estimé ($Q_{est}$) *en* répétant le cycle de mesure du procédé à des intervalles de mesure prédéfinis *($t_{meas}$)* ou au besoin lorsque la vidange du récipient est détectée.

5. Procédé selon une quelconque des revendications 1 à 4, **caractérisé par** l'activation du mode veille du convertisseur de fréquence (2), durant lequel la pompe (3) n'est pas en service, si le débit entrant moyen estimé *(Q_{est})* est inférieur à une valeur limite minimale prédéfinie (Q_{p,min}).

6. Procédé selon la revendication 5, **caractérisé par** la sortie du mode veille en raison d'un nouveau cycle de mesure.

7. Procédé selon la revendication 5 ou 6, dans lequel le récipient (1) ou analogue comprend un capteur de mesure indiquant les données de limites supérieures du niveau de matière, **caractérisé par** la sortie du mode veille et le retour à un fonctionnement normal en raison d'une indication de limite supérieure par le capteur de mesure.

8. Procédé selon une quelconque des revendications 1 à 7, **caractérisé par** :

> vidange du récipient (1) pour la première fois pendant le cycle de mesure du procédé en utilisant un débit nominal de la pompe (3),
> mesure du temps de vidange (t_{drain,O}), et utilisation du temps obtenu conjointement avec le débit nominal (Q_{p,nom}) de la pompe (3) et le débit entrant moyen estimé (Q_{est}) pour estimer le volume de matière *(v_{est})* dans le récipient (1) ou analogue avant le cycle de mesure du procédé comme suit :

$$v_{est} = -(Q_{est} + Q_{p,nom}) \cdot t_{drain,0}$$

> où le débit entrant moyen estimé Q_{est} est défini selon le procédé en utilisant les résultats de mesure selon le présent cycle de mesure du procédé.

9. Procédé selon la revendication 8, **caractérisé par** le retour, à la fin du cycle de mesure selon le procédé, du volume de matière (v) dans le récipient (1) à un niveau désiré en laissant le récipient se remplir tandis que la pompe est inactive pendant le temps d'une second temps de remplissage (t_{fill,1}), le second temps de remplissage (t_{fill,1}) étant obtenu en utilisant l'équation

$$t_{fill,1} = \frac{v}{Q_{est}}$$

10. Procédé selon la revendication 8 ou 9, **caractérisé par** le calcul du facteur de remplissage du récipient (1) en divisant le volume de matière estimé (v_{est}) par le volume de matière nominal connu du récipient (1).

11. Appareil agencé pour faire fonctionner un entraînement de pompe relié à un récipient (1) ou analogue, dans lequel un convertisseur de fréquence (2) est agencé pour fournir de la puissance à une pompe (3) de telle manière que le débit (Q_{p}) de la pompe soit sensible à un débit entrant estimé *(Q_{est})* dans le récipient (1), **caractérisé en ce que** l'appareil comprend des moyens configurés pour :

> vidanger le récipient (1),
> laisser le récipient (1) se remplir pendant un temps de remplissage prédéfini (t_{fill}) tandis que la pompe (3) est inactive,
> vidanger à nouveau le récipient (1) à un débit connu (Q_{p,nom}) de la pompe (3),
> définir un temps de vidange (t_{drain}),
> définir un débit entrant moyen estimé *(Q_{est})* sur la base du temps de vidange (t_{drain}), du temps de remplissage (t_{fill}) et du débit connu (Q_{p,nom}) de la pompe,
> régler la puissance fournie par le convertisseur de fréquence (2) à la pompe (3) de façon que le débit (Q_{p}) de la pompe (3) corresponde au débit entrant moyen estimé (Q_{est}) produit.

FIG 1

FIG 2

FIG 3

**EP 2 306 020 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 58113596 A

- JP 2001073957 A